# EUROPÄISCHE PATENTSCHRIFT

(11) **EP 3 152 177 B1**
(45) Veröffentlichungstag und Bekanntmachung des Hinweises auf die Patenterteilung: **01.05.2019**
(21) Anmeldenummer: 15738814.1
(22) Anmeldetag: 05.06.2015
(51) Int. Cl.: C04B 20/06

(54) **VERFAHREN ZUR EXPANSION VON SANDKORNFÖRMIGEM ROHMATERIAL**
METHOD FOR EXPANDING SAND-GRAIN-SHAPED RAW MATERIAL
PROCÉDÉ POUR L'EXPANSION D'UNE MATIÈRE PREMIÈRE AYANT LA FORME DE GRAINS DE SABLE

(30) Priorität: 05.06.2014 AT 5008814 U
(43) Veröffentlichungstag der Anmeldung: 12.04.2017
(60) Teilanmeldung: 19163994.7
(73) Patentinhaber: Binder + Co AG, 8200 Gleisdorf (AT)
(72) Erfinder: TSCHERNKO, Harald, A-8200 Gleisdorf (AT); PUSCH, Markus Alfred, A-8051 Graz (AT); NEUKAM, Bernhard, A-8046 Stattegg (AT); BRUNNMAIR, Ernst Erwin, A-8045 Graz (AT)
(74) Vertreter: KLIMENT & HENHAPEL
(86) Internationale Anmeldenummer: PCT/AT2015/050142
(87) Internationale Veröffentlichungsnummer: WO 2015/184481

(56) Entgegenhaltungen:
- WO-A1-2009/009817
- WO-A1-2013/053635
- DE-A1- 19 722 906
- US-A- 2 625 512
- US-A- 4 180 185

## Beschreibung

### GEBIET DER ERFINDUNG

Die Erfindung bezieht sich auf ein Verfahren zur Expansion von sandkornförmigen Rohmaterial, bei dem das Rohmaterial durch einen, mit Mittel zur Ausbildung eines Temperaturprofils versehenen, im Wesentlichen vertikalen erhitzten Schacht, in dem eine Schachtströmung vorherrscht, nach unten fällt, wobei das Rohmaterial auf Grund der Wärmeübertragung im Schacht zu geblähtem Granulat expandiert und das entstandene Granulat in eine pneumatische Förderleitung mit einer Förderströmung zwecks Weitertransport gelangt, sowie auf eine Vorrichtung, die eine Trennvorrichtung, vorzugsweise einen Gaszyklon, welche mit einer pneumatischen Förderleitung verbindbar ist, aufweist.

### STAND DER TECHNIK

Ein Verfahren zur Herstellung eines geblähten Granulats aus sandkornförmigen Rohmaterial ist in der WO 2013/053635 A1 offenbart, deren Aufgabe darin besteht, eine geschlossene Oberfläche des geblähten Granulats kontrollierbar einzustellen, so dass das geblähte Granulat keine bzw. kaum Hygroskopie aufweist. Außerdem soll die Möglichkeit geschaffen werden, die Oberflächenstruktur des geblähten Granulats und damit die Rauigkeit gezielt zu beeinflussen. Dazu schlägt diese Druckschrift vor, mehrere entlang der Fallstrecke des sandkornförmigen Rohmaterials angeordnete und unabhängig voneinander steuerbare Heizelemente als Mittel zur Ausbildung eines Temperaturprofils vorzusehen und entlang der Fallstrecke eine Temperaturdetektion durchzuführen, wobei die Heizelemente unterhalb des Bereiches, in dem der Blähvorgang stattfindet, in Abhängigkeit der detektierten Temperatur gesteuert werden. Der Abtransport des geblähten Granulats aus dem unteren Ende der Fallstrecke wird über eine pneumatische Förderleitung gewährleistet, in die die Fallstrecke mündet.

Durch die vertikale Ausrichtung des Schachtes und auf Grund der zusätzlichen Einbringung bzw. Absaugung von den Blähvorgang begleitenden Prozessgasen treten innerhalb des Schachtes Strömungen auf, die auf das sandkornförmige Rohmaterial einwirken. Insbesondere die Ausbildung einer wandnahen aufwärts gerichteten Grenzschichtströmung hat einen positiven Effekt auf die Qualität des Blähvorganges, denn durch diese Grenzschichtströmung wird ein Anbacken des sandkornförmigen Rohmaterials an der Wand des Schachtes verhindert. Wird der Expansionsschacht nach oben hin geschlossen, stellt sich zusätzlich zur nach oben gerichteten Grenzschichtströmung eine mittige nach unten gerichtete Kernströmung ein. Diese Kernströmung verhindert einen Teil der oben beschriebenen Grenzschichtströmung und hat deshalb Anbackungen zur Folge. Durch die bislang bekannte Absaugung / Einblasung von Prozessgas aus dem / in den Kopfbereich des Schachtes kann der Einfluss der Kernströmung verringert werden.

Solche oben beschriebenen Anbackungen an den Schachtwänden haben zur Folge, dass die Wärmeübertragung von den Schachtwänden auf das Rohmaterial verschlechtert wird. Außerdem kommt es dadurch zu einem Abriss der Grenzschichtströmung, was zu weiteren Anbackungen in anderen Bereichen des Schachtes führt. Dadurch verschlechtert sich die Qualität des Blähvorganges erheblich und der Anteil an nicht erwünschtem, ungeblähtem Granulat, welches den Schacht verlässt, erhöht sich.

Da es sich bei dem sandkornförmigen Rohmaterial um einen natürlich vorkommenden Rohstoff handelt, weist dieses Schwankungen in seiner Zusammensetzung auf, beispielsweise im Anteil an Treibmitteln. Dies führt dazu, dass bei konstanten Prozessparametern, in etwa bei der Ausbildung eines bestimmten Temperaturprofils im Schacht durch die unterschiedlich steuerbaren Heizelemente, die Qualität des Blähvorganges, abhängig von der Beschaffenheit des Rohmaterials, nicht gleichbleibend ist.

Die Qualität des Blähvorganges wird in bekannten Verfahren nur stichprobenartig gemessen und der Prozess daraufhin neu eingestellt oder gestoppt.

Als Nachteil des Standes der Technik kann somit angesehen werden, dass weder die schwankende Zusammensetzung des sandkornförmigen Rohmaterials noch die Bildung von Anbackungen zeitnah detektiert werden können, was jedenfalls zu einer Verschlechterung der Qualität des Endproduktes führt, da der Anteil des ungeblähten Granulats ansteigt bzw. die gewünschten Eigenschaften des geblähten Granulats nicht erreicht werden.

Die DE 6608156 U betrifft ein Gerät zum Bestimmen des Litergewichts von Brenngut, wobei ein mit einer Wiegeeinrichtung verbundener Behälter kontinuierlich über ein Doppel-Vibrationssieb befüllt wird und über eine Austragseinrichtung kontinuierlich Brenngut aus dem Behälter austragbar ist.

Die US 4 180 185 A zeigt eine Methode zur laufenden Messung des Gewichts von Fasern oder Pulver geringer Dichte, wie Perlit. Die Fasern bzw. das Pulver geringer Dichte werden dabei durch einen Gaszyklon abgeschieden und durch ein Hochdruckgebläse geleitet, durch welches sie zu einen mit radioaktiver Strahlung arbeitenden Detektor zur Messung des Gewichts gefördert werden.

### DARSTELLUNG DER ERFINDUNG

Die der vorliegenden Erfindung zu Grunde liegende Aufgabenstellung besteht darin, ein Verfahren zur Herstellung eines geblähten Granulats aus sandkornförmigem Rohmaterial und eine Vorrichtung zur Messung der Schüttdichte bereitzustellen, die die beschriebenen Nachteile nicht aufweisen und dafür sorgen, dass die Qualität des Blähvorganges kontinuierlich überwacht werden kann. Das Verfahren soll einen störungsfreien und wartungsarmen Betrieb gewährleisten. Die Vorrichtung soll sich durch eine einfache und zuverlässige Konstruktion auszeichnen. Des Weiteren soll die Erfindung auf bestehenden Anlagen ohne viel Aufwand nachrüstbar sein.

Dieses Ziel wird mit dem eingangs erwähnten Verfahren dadurch erreicht, dass die Schüttdichte des geblähten Granulates ständig gemessen wird, wobei bei der Detektion einer Abweichung von zumindest einer definierten Schüttdichte das Temperaturprofil im Schacht automatisch oder von Hand angepasst wird und/oder die Aufgabe von Rohmaterial in den Schacht automatisch oder von Hand reduziert wird.

Die Erfindung basiert darauf, dass durch eine ständige Messung der Schüttdichte die Qualität des Blähvorganges kontinuierlich überwacht wird. Ändert sich die Schüttdichte, kann der Blähprozess entsprechend angepasst werden. Dies kann einerseits dadurch bewerkstelligt werden, dass ein Signal, beispielsweise ein Warnton, dem Benutzer zu erkennen gibt, dass eine Anpassung des Prozesses notwendig ist, oder andererseits durch einen automatisierten Vorgang, bei dem die Anlage selbstständig das Verfahren nach vorgegebenen Parametern anpasst.

Wird auf Grund der Änderung der Schüttdichte eine schwankende Beschaffenheit des Rohmaterials festgestellt, so kann diese durch Anpassung des Temperaturprofils im Schacht ausgeglichen werden. Werden aber auf Grund der Messung Anbackungen im Schacht festgestellt, kann die Aufgabe von Rohmaterial reduziert, vorzugsweise gestoppt, werden, um weitere Anbackungen im Schacht zu verhindern und damit den Wiederinstandsetzungsaufwand zu minimieren.

Bezüglich des verwendeten sandkornförmigen Rohmaterials können nicht nur mineralische Sande verwendet werden, in denen Wasser als Treibmittel gebunden ist, wie beispielsweise Perlit oder Obsidiansand. Ebenso kann es sich um mineralischen Staub handeln, der mit wasserhaltigem mineralischem Bindemittel gemischt ist, wobei in diesem Fall das wasserhaltige mineralische Bindemittel als Treibmittel wirkt. Der Blähvorgang kann in diesem Fall folgendermaßen vor sich gehen: Der mineralische Staub, der aus relativ kleinen Sandkörnern von beispielsweise 20 pm Durchmesser besteht, bildet mit dem Bindemittel größere Körner von beispielsweise 500 pm. Bei einer kritischen Temperatur werden die Oberflächen der Sandkörner des mineralischen Staubs plastisch und bilden geschlossene Oberflächen der größeren Körner bzw. verschmelzen zu solchen. Da die geschlossene Oberfläche eines einzelnen größeren Korns in der Regel insgesamt kleiner ist als die Summe aller Oberflächen der einzelnen Sandkörner des mineralischen Staubs, welche an der Bildung dieses größeren Korns beteiligt sind, wird auf diese Weise Oberflächenenergie gewonnen bzw. nimmt das Verhältnis von Oberfläche zu Volumen ab. In diesem Moment liegen also größere Körner mit jeweils einer geschlossenen Oberfläche vor, wobei die Körner eine Matrix aus mineralischem Sandstaub sowie wasserhaltiges mineralisches Bindemittel aufweisen. Da die Oberflächen dieser größeren Körner nach wie vor plastisch sind, kann in der Folge der sich ausbildende Wasserdampf die größeren Körner blähen. D.h. das wasserhaltige mineralische Bindemittel wird als Treibmittel verwendet. Alternativ kann auch mineralischer Staub mit einem Treibmittel gemischt werden, wobei das Treibmittel mit mineralischem Bindemittel, welches vorzugsweise Wasser enthält, vermengt ist. Als Treibmittel kann beispielsweise CaCO3 Verwendung finden. Der Blähvorgang kann in diesem Fall analog zum oben geschilderten vor sich gehen: Der mineralische Staub, welcher eine relativ kleine Sandkorngröße (beispielsweise 20 pm Durchmesser) aufweist, bildet mit dem Treibmittel und dem mineralischen Bindemittel größere Körner (beispielsweise 500 pm Durchmesser). Bei Erreichen einer kritischen Temperatur werden die Oberflächen der Sandkörner des mineralischen Staubs plastisch und bilden eine geschlossene Oberfläche der größeren Körner bzw. verschmelzen zu einer solchen. Die geschlossenen Oberflächen der größeren Körner sind nach wie vor plastisch und können nun vom Treibmittel gebläht werden. Falls das mineralische Bindemittel wasserhaltig ist, kann dieses als zusätzliches Treibmittel fungieren. Daher ist es bei einer bevorzugten Ausführungsform des erfindungsgemäßen Verfahrens vorgesehen, dass es sich bei dem mineralischem Material mit Treibmittel um mineralisches Material handelt, in dem Wasser gebunden ist und als Treibmittel wirkt, oder um mineralischen Staub gemischt mit wasserhaltigem mineralischen Bindemittel, welches als Treibmittel wirkt, oder um mineralischen Staub gemischt mit einem Treibmittel, welches mit mineralischem Bindemittel vermengt ist, wobei das mineralische Bindemittel vorzugsweise Wasser beinhaltet und als zusätzliches Treibmittel wirkt. Um das dargestellte Verfahren möglichst effizient durchführen zu können, ist es bevorzugt neben einem Schachtofen mehrere Heizzonen mit (unabhängig voneinander) regelbaren Heizelementen sowie eine intelligente Regel- und Steuereinheit vorzusehen. Dies steuert die Heizelemente bevorzugt in Abhängigkeit von gemessenen Temperaturen entlang des Ofenschachtes.

Das erfindungsgemäße Verfahren kann beispielsweise wie in der WO 2013/053635 A1 ausgebildet sein. Deren Offenbarung wird daher zur Gänze in diese Beschreibung aufgenommen.

Erfindungsgemäß ist weiters vorgesehen, dass das geblähte Granulat durch eine Trennvorrichtung, vorzugsweise einen Gaszyklon, von der Förderströmung in der Förderleitung abgeschieden wird. Durch das Anbringen einer Trennvorrichtung in der Förderleitung wird das Abscheiden des geblähten Granulats ermöglicht. Da es sich bei dem geblähten Granulat um das Endprodukt des Verfahrens handelt, ist die gebündelte Ausbringung aus der Förderströmung, insbesondere durch einen Gaszyklon, vorteilhaft, da diese mit einem Behälter verbunden werden kann wie beispielsweise einem Silo.

Nach einem weiteren Aspekt der Erfindung wird die Schüttdichte des durch die Trennvorrichtung, insbesondere den Gaszyklon, abgeschiedenen Granulats gemessen. Eine Messung an dieser Stelle des Verfahrens ist insbesondere deswegen von Vorteil, weil keine zusätzlichen komplexen Aggregate in der Förderleitung notwendig sind wie etwa optische Mittel oder eine separate Messleitung.

Erfindungsgemäß wird das abgeschiedene geblähte Granulat darüberhinaus zu einem Granulatstrom gebündelt und dieser in einen Messbehälter geleitet, wobei der Messbehälter mit einer Messeinrichtung zur Bestimmung der Schüttdichte verbunden wird. Auf diese Art und Weise wird eine Messung der Schüttdichte über das definierte Volumen des Messbehälters und die über die Messeinrichtung gewogenen Masse erreicht. Dabei ist die Geometrie des Messbehälters vorzugsweise sehr einfach zu gestalten, etwa als Zylinder oder als Quader. Durch die Bündelung des Granulatstroms wird eine gleichmäßige Befüllung des Messbehälters sicher gestellt, so dass dieser auch bei geringer Auslastung des Verfahrens noch ausreichend befüllt wird, bzw. ausreichend schnell eine Änderung der Qualität des Blähprozesses detektiert.

Erfindungsgemäß weist der Messbehälter Öffnungen in der Bodenfläche auf, durch die zumindest ein Teil des Granulatstroms kontinuierlich abfließt. Durch diese Anordnung wird gewährleistet, dass ein gewisser Teil, vorzugsweise 60% der gesamten Produktionsmenge des geblähten Granulats, kontinuierlich durch den Messbehälter fließen, um eine zeitnahe Messung der Schüttdichte und damit der Bestimmung der Blähqualität zu ermöglichen.

Eine weitere Ausführungsvariante sieht vor, dass ein Dosierelement zwischen Schacht und Förderleitung vorgesehen ist, in welchem die Menge des Granulats, welche vom Schacht in die Förderleitung übergeht, über Mittel zur Regelung geregelt wird, so dass eine definierte Materialansammlung des Granulats im Dosierelement als Puffer ausgebildet wird, welche die Schachtströmung von der Förderströmung entkoppelt. Diese Anordnung hat insbesondere positive Auswirkungen auf die Schachtströmung, wenn dadurch die Schachtströmung von der Förderströmung entkoppelt wird, da sich Druckschwankungen aus der Förderleitung, etwa durch den Reinigungszyklus eines Filters, nicht mehr auf die Schachtströmung auswirken und dadurch ebenfalls die Häufigkeit von Anbackungen im Schacht vermindert werden kann.

Gemäß einer bevorzugten Ausführungsvariante wird die Förderströmung durch eine Absaugeinrichtung erzeugt. Wird die Absaugeinrichtung an dem Ende der Förderleitung, welches dem Schacht abgewandt ist, angebracht, ergibt sich eine Förderströmung über die gesamte Länge der Förderleitung, wobei auch andere Elemente wie beispielsweise Filteranlagen in der Förderleitung angebracht sein können.

Weitere besonders bevorzugte Ausführungsvarianten sehen vor, dass aus dem Kopfbereich des Schachtes Prozessluft abgesaugt wird oder dass in den Kopfbereich des Schachtes Prozessluft eingeblasen wird, um den zum Kopfbereich gerichteten Teil der Schachtströmung zu stabilisieren. Diese Variante realisiert eine besonders hohe Qualität des Blähvorganges, da durch die Absaugung bzw. Einblasung von Prozessluft die Strömungsverhältnisse dahingehend stabilisiert werden, dass keine, schädliche Anbackungen fördernden, Sekundärströmungen begünstigt werden.

Eine erfindungsgemäßen Vorrichtung zur Messung der Schüttdichte des geblähten Granulats umfasst eine als Gaszyklon ausgebildete Trennvorrichtung, welche mit einer pneumatischen Förderleitung verbindbar ist, wobei zumindest ein Messbehälter, welcher eine Bodenfläche aufweist, zur Aufnahme zumindest eines Teils des Granulatstroms aus der als Gaszyklon ausgebildeten Trennvorrichtung, im Betriebszustand unterhalb des Gaszyklons angeordnet ist, wobei der Messbehälter mit einer Messeinrichtung zur Bestimmung der Schüttdichte verbunden ist. Es hat sich als besonders vorteilhaft herausgestellt, wenn die Trennvorrichtung als Gaszyklon ausgebildet ist, wobei auch andere Trennvorrichtungen denkbar sind.

Diese Vorrichtung basiert darauf, dass das von der Trennvorrichtung (vom Gaszyklon) abgeschiedene Granulat in einen Messbehälter überführt wird, um diesen zu füllen und gefüllt zu halten, wobei nicht der gesamte Granulatstrom in den Messbehälter gelangen muss - ein Teil davon genügt. Dadurch, dass der Messbehälter im Betriebszustand unterhalb des Gaszyklons angeordnet ist, ist keine weitere Fördereinrichtung notwendig, die Schwerkraft reicht aus. Über das definierte Volumen des Messbehälters kann nun mittels einer geeigneten Messeinrichtung in einfacher Art und Weise die Schüttdichte gemessen werden.

Erfindungsgemäß ist die Messeinrichtung als Wiegeeinrichtung, vorzugsweise als Waage, ausgebildet. Diese einfache Form der Gewichtsbestimmung lässt eine technisch nicht aufwändige und kostengünstige Messung der Schüttdichte zu und kann ohne großen zusätzlichen Aufwand verbaut werden.

Erfindungsgemäß weist der Messbehälter Öffnungen in der Bodenfläche auf, um zumindest einen Teil des Granulatstroms kontinuierlich abfließen zu lassen. Durch diese Anordnung wird gewährleistet, dass ein gewisser Teil, vorzugsweise 60% der gesamten Produktionsmenge des geblähten Granulats, kontinuierlich durch den Messbehälter fließen, um eine zeitnahe Messung der Schüttdichte und damit der Bestimmung der Blähqualität zu ermöglichen.

In einer weiteren bevorzugten Ausführungsvariante einer erfindungsgemäßen Vorrichtung zur Messung der Schüttdichte des geblähten Granulats ist zwischen der als Gaszyklon ausgebildeten Trennvorrichtung und dem Messbehälter ein Mittel zur Bündelung des Granulatstroms, vorzugsweise ein Trichter angeordnet, wodurch eine besonders einfache Bündelung realisiert wird. Durch die Bildung eines gebündelten Granulatstromes ist die Befüllung des Messbehälters auch dann gewährleistet, wenn sich wenig Granulat in der Förderströmung befindet.

Eine weitere besonders bevorzugte Ausführungsvariante einer erfindungsgemäßen Vorrichtung zur Messung der Schüttdichte des geblähten Granulats sieht vor, dass der Messbehälter über einen Ausleger mit der Messeinrichtung verbunden ist, wodurch eine besonders einfache Positionierung des Messbehälters im Granulatstrom erreicht wird, die auch bei bereits bestehenden Anlagen nachgerüstet werden kann.

Gemäß einer weiteren besonders bevorzugten Ausführungsvariante einer erfindungsgemäßen Vorrichtung zur Messung der Schüttdichte des geblähten Granulats ist an dem Messbehälter ein Überlauf für zumindest einen Teil des Granulatstroms vorgesehen. Diese Variante ermöglicht es bei vollständiger Füllung des Messbehälters einen Stau des Granulatstroms zu verhindern, in dem der überschüssige Teil des Stroms, vorzugsweise über den Rand des Messbehälters, aus dem Messbehälter austreten kann.

Grundsätzlich wäre es auch denkbar, dass die Bodenfläche des Messbehälters keine Öffnungen aufweist und eine Einrichtung zur zyklischen Entleerung des Messbehälters, vorzugsweise durch Schwenken, vorgesehen ist.

Die eingangs gestellte Aufgabe wird auch durch eine erfindungsgemäße Anlage zur Durchführung eines erfindungsgemäßen Verfahrens mit einer erfindungsgemäßen Vorrichtung zur Messung der Schüttdichte gelöst, wobei der im Wesentlichen vertikale erhitzte Schacht über die pneumatische Förderleitung mit der als Gaszyklon ausgebildeten Trennvorrichtung verbunden ist.

### KURZE BESCHREIBUNG DER FIGUREN

Im Anschluss folgt nun eine detaillierte Beschreibung eines erfindungsgemäßen Verfahrens und einer erfindungsgemäßen Vorrichtung. Dabei zeigt
- Fig. 1: eine schematische Abbildung einer erfindungsgemäßen Anlage,
- Fig. 2: eine Detailansicht zu Fig. 1 mit einer erfindungsgemäßen Vorrichtung.

### WEGE ZUR AUSFÜHRUNG DER ERFINDUNG

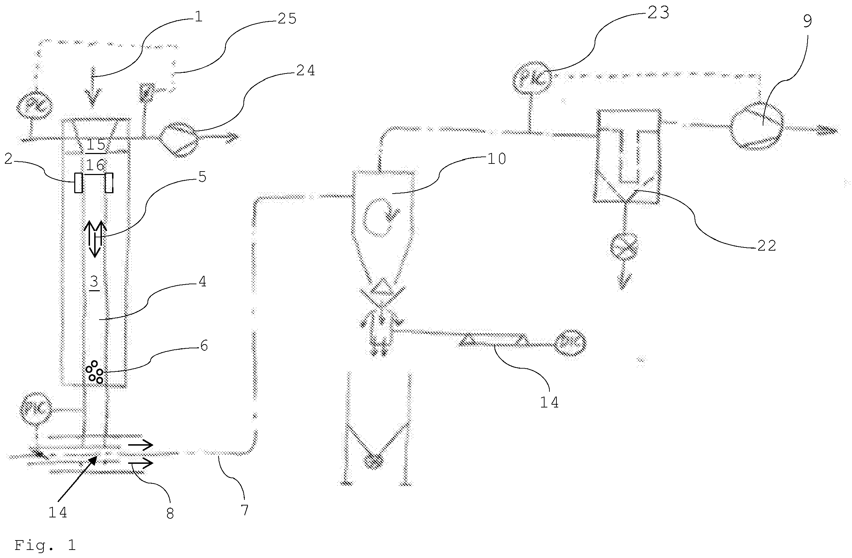

Figur 1 zeigt eine Anlage zu Expansion von sandkornförmigen Rohmaterial 1. Dabei fällt das Rohmaterial 1 durch einen vertikalen Schacht 4, welcher mit Mitteln 2 zur Ausbildung eines Temperaturprofils 3, in der vorliegenden Ausführungsvariante werden mehrere elektrische Widerstandsheizungen 2 verwendet, beheizbar ist. Die Aufgabe des Rohmaterials erfolgt im Kopfbereich 15 des Schachtes 4. Dadurch, dass die Widerstandsheizungen 2 einzeln steuerbar sind, lässt sich längs des Schachts 4 ein bestimmtes Temperaturprofil 3 einstellen. Durch die Wärmestrahlung die vom Schacht 4 auf das Rohmaterial 1 wirkt, expandiert das Rohmaterial 1 zu geblähtem Granulat 6. Im Schacht 4 stellt sich durch die erhitzen Wände des Schachtes 4 und die entstehenden Prozessluft 16 eine Schachtströmung 5 ein.

Im Kopfbereich 15 des Schachtes 4 ist eine weitere Absaugeinrichtung 24 vorgesehen, welche Prozessluft 16 aus dem Kopfbereich 15 absaugt und damit die Schachtströmung 5 stabilisiert. Zusätzlich ist noch ein Regelkreis 25 mit der weiteren Absaugeinrichtung 24 gekoppelt, der den Anteil an abgesaugter Prozessluft 16 und angesaugter Umgebungsluft regelt. Ebenso kann zur Stabilisierung der Schachtströmung 5 Prozessluft 16 in den Kopfbereich 15 eingeblasen werden, entweder durch diese weitere Absaugeinrichtung 24 oder durch eine weitere, hier nicht dargestellte Einrichtung.

Am Ende des Schachtes 4 befindet sich ein Dosierelement 14, welches die Menge des Granulats 6, welche vom Schacht 4 in die pneumatische Förderleitung 7 gefördert wird, regelt. In alternativen Ausführungsvarianten ist dieses Dosierelement 14 nicht vorgesehen, wodurch der Schacht 4 direkt in die Förderleitung 7 mündet.

An einem Ende der pneumatische Förderleitung 7 ist eine Absaugeinrichtung 9 angebracht, die vorzugsweise als Ventilator ausgeführt ist, die Umgebungsluft vom anderen Ende, welches zur Umgebung hin offen ausgeführt ist, der Förderleitung 7 durch diese saugt und so geblähtes Granulat 6 befördert. Innerhalb dieser Förderleitung 7 ist ein Gaszyklon 10 angeordnet, über welchen das Granulat 6 aus der Förderleitung abgeschieden wird. In der Förderleitung 7 befindet sich eine Filteranlage 22, die bevorzugter Weise zwischen Gaszyklon 10 und Absaugeinrichtung 9 angeordnet ist, die kleine Partikel aus der Förderleitung 7 abscheidet. Über eine weitere Messeinrichtung 23 wird, durch Messen des Differenzdruckes, die Fördermenge der Absaugeinrichtung 9 so gesteuert, dass die Strömungsgeschwindigkeit in der Förderleitung 7 auch bei Verschmutzung der Filteranlage 22 konstant bleibt.

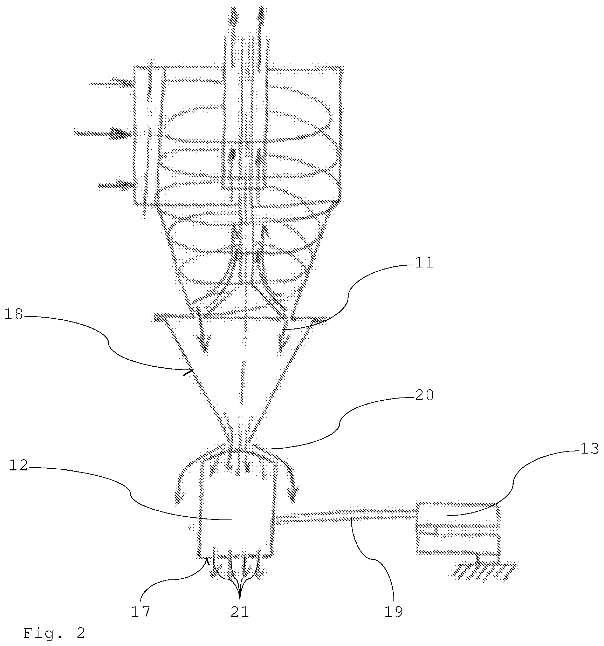

Figur 2 zeigt eine Detailansicht einer Vorrichtung zur Messung der Schüttdichte des geblähten Granulats 6 aus der hervorgeht, dass die Vorrichtung eine als Gaszyklon 10 ausgebildete Trennvorrichtung umfasst, wobei der Gaszyklon 10 gemäß Fig. 1 mit der pneumatischen Förderleitung 7 verbunden ist. Das aus der Förderleitung 7 stammende geblähte Granulat 6 wird mittels des Gaszyklons 10 als Granulatstrom 11 von der Förderströmung 8 in der Förderleitung 7 abgeschieden. In dieser Ausführungsvariante wird im Betriebszustand unterhalb des Gaszyklons 10 ein Messbehälter 12 angebracht, welcher zumindest einen Teil des Granulatstroms 11, der aus der Förderleitung 7 im Gaszyklon 10 abgeschieden wird, aufnimmt. Um diesen Granulatstrom 11 zu bündeln, befindet sich ein Trichter 18 zwischen dem Gaszyklon 10 und dem Messbehälter 12. Vorzugsweise fallen die Längsachsen des Gaszyklons 10, des Trichters 18 und des Messbehälters 12, zu einer Achse zusammen. Der Teil des Granulatstromes 11, der nicht vom Messbehälter 12 aufgenommen werden kann, kann mittels eines Überlaufs 20 über den Rand des Messbehälters 12 aus diesem austreten. Der Messbehälter 12 ist über einen Ausleger 19 mit der Messeinrichtung 13, welche als Wiegeeinrichtung ausgeführt ist, verbunden. Durch die Bestimmung des Gewichts in der Wiegeeinrichtung und dem bekannten Volumen des Messbehälters 12 lässt sich somit kontinuierlich die Schüttdichte des geblähten Granulats 6 messen.

Werden Abweichungen von der gewünschten Schüttdichte festgestellt, wird anhand von Erfahrungswerten das Temperaturprofil 3 des Schachts 4 geändert, oder basierend auf Erfahrungswerten die Menge des dem Schacht 4 aufgegebenen Rohmaterials reduziert oder basierend auf Erfahrungswerten sowohl das Temperaturprofil geändert als auch die Menge des dem Schacht 4 aufgegebenen Rohmaterials reduziert.

Die Fig. 2 zeigt auch, dass der Messbehälter 12 auf seiner Bodenfläche 17 Öffnungen 21 aufweist, durch welche ein Teil des Granulatstroms 11 kontinuierlich fließt. Diese Öffnungen 21 können eine beliebige Form aufweisen, beispielsweise Rechtecke, Schlitze oder Quadrate, wobei insbesondere kreisrunde Öffnungen 21 bevorzugt zum Einsatz kommen.

Typische Granaliendurchmesser des geblähten Granulats 6 können im Bereich von 0,5 bis 5 mm liegen. Um den kontinuierlichen Fluss durch den Messbehälter 12 zu gewährleisten, liegt das Verhältnis zwischen dem Granaliendurchmesser und dem Durchmesser der Öffnungen 21 vorzugsweise zwischen 1:3 und 1:100, besonders bevorzugt zwischen 1:5 und 1:50, insbesondere zwischen 1:5 und 1:25. Beispielsweise ergibt sich damit bei einem Granaliendurchmesser von 2 mm und einem Verhältnis von 1:10 der Durchmesser der Öffnungen 21 mit 2 mm x 10 zu 20 mm.

### BEZUGSZEICHENLISTE

- 1: sandkornförmiges Rohmaterial
- 2: Mittel zur Ausbildung eines Temperaturprofils (Widerstandsheizungen)
- 3: Temperaturprofil
- 4: Schacht
- 5: Schachtströmung
- 6: geblähtes Granulat
- 7: pneumatische Förderleitung
- 8: Förderströmung
- 9: Absaugeinrichtung
- 10: Gaszyklon
- 11: Granulatstrom
- 12: Messbehälter
- 13: Messeinrichtung
- 14: Dosierelement
- 15: Kopfbereich
- 16: Prozessluft
- 17: Bodenfläche
- 18: Trichter
- 19: Ausleger
- 20: Überlauf
- 21: Öffnungen
- 22: Filteranlage
- 23: weitere Messeinrichtung
- 24: weitere Absaugeinrichtung
- 25: Regelkreis

## Patentansprüche

1. Verfahren zur Expansion von sandkornförmigen Rohmaterial (1), bei dem das Rohmaterial (1) durch einen, mit Mittel (2) zur Ausbildung eines Temperaturprofils (3) versehenen, im Wesentlichen vertikalen erhitzten Schacht (4), in dem eine Schachtströmung (5) vorherrscht, nach unten fällt, wobei das Rohmaterial (1) auf Grund der Wärmeübertragung im Schacht (4) zu geblähtem Granulat (6) expandiert und das entstandene Granulat (6) in eine pneumatische Förderleitung (7) mit einer Förderströmung (8) zwecks Weitertransport gelangt, **dadurch gekennzeichnet, dass** die Schüttdichte des geblähten Granulates (6) ständig gemessen wird,
wobei bei der Detektion einer Abweichung von zumindest einer definierten Schüttdichte das Temperaturprofil (3) im Schacht (4) automatisch oder von Hand angepasst wird und/oder die Aufgabe von Rohmaterial (1) in den Schacht (4) automatisch oder von Hand reduziert wird,
wobei das geblähte Granulat (6) durch eine Trennvorrichtung, vorzugsweise einen Gaszyklon (10), von der Förderströmung (8) in der Förderleitung (7) abgeschieden wird,
wobei die Schüttdichte des durch die Trennvorrichtung, insbesondere den Gaszyklon (10), abgeschiedenen Granulats (6) gemessen wird,
wobei das abgeschiedene geblähte Granulat (6) zu einem Granulatstrom (11) gebündelt wird und dieser in einen Messbehälter (12) geleitet wird,
wobei der Messbehälter (12) mit einer als Wiegeeinrichtung ausgebildeten Messeinrichtung (13) zur Bestimmung der Schüttdichte verbunden wird, und
wobei der Messbehälter (12) Öffnungen (21) in einer Bodenfläche (17) aufweist, durch welche zumindest ein Teil des Granulatstroms (11) kontinuierlich abfließt.

2. Verfahren nach Anspruch 1, **dadurch gekennzeichnet, dass** die Förderströmung (8) mittels einer Absaugeinrichtung (9) erzeugt wird.

3. Verfahren nach einem der Ansprüche 1 bis 2, **dadurch gekennzeichnet, dass** ein Dosierelement (14) zwischen Schacht (4) und Förderleitung (7) vorgesehen ist.

4. Verfahren nach einem der Ansprüche 1 bis 3, **dadurch gekennzeichnet, dass** aus dem Kopfbereich (15) des Schachtes (4) Prozessluft (16) abgesaugt wird, um den zum Kopfbereich (15) gerichteten Teil der Schachtströmung (5) zu stabilisieren.

5. Verfahren nach einem der Ansprüche 1 bis 3, **dadurch gekennzeichnet, dass** in den Kopfbereich (15) des Schachtes (4) Prozessluft (16) eingeblasen wird, um den zum Kopfbereich (15) gerichteten Teil der Schachtströmung (5) zu stabilisieren.

6. Vorrichtung zur Messung der Schüttdichte des geblähten Granulats (6) nach einem der Ansprüche 1 bis 5, umfassend eine als Gaszyklon (10) ausgebildete Trennvorrichtung, welche mit einer pneumatischen Förderleitung (7) verbindbar ist, wobei zumindest ein Messbehälter (12), welcher eine Bodenfläche (17) aufweist, zur Aufnahme zumindest eines Teils des Granulatstroms (11) aus der als Gaszyklon (10) ausgebildeten Trennvorrichtung, im Betriebszustand unterhalb des Gaszyklons (10) angeordnet ist, wobei der Messbehälter (12) mit einer Messeinrichtung (13) zur Bestimmung der Schüttdichte verbunden ist, **dadurch gekennzeichnet, dass** die Messeinrichtung (13) als Wiegeeinrichtung, vorzugsweise als Waage, ausgebildet ist und dass der Messbehälter (12) Öffnungen (21) in der Bodenfläche (17) aufweist, um zumindest einen Teil des Granulatstroms (11) kontinuierlich abfließen zu lassen.

7. Vorrichtung nach Anspruch 6, **dadurch gekennzeichnet, dass** zwischen der als Gaszyklon (10) ausgebildeten Trennvorrichtung und dem Messbehälter (12) ein Mittel zur Bündelung des Granulatstroms (11), vorzugsweise ein Trichter (18), angeordnet ist.

8. Vorrichtung nach Anspruch 6 oder 7, **dadurch gekennzeichnet, dass** der Messbehälter (12) über einen Ausleger (19) mit der Messeinrichtung (13) verbunden ist.

9. Vorrichtung nach einem der Ansprüche 6 bis 8, **dadurch gekennzeichnet, dass** an dem Messbehälter (12) ein Überlauf (20) für zumindest einen Teil des Granulatstroms (11) vorgesehen ist.

10. Anlage zur Durchführung eines Verfahrens nach einem der Ansprüche 1 bis 5 mit einer Vorrichtung zur Messung der Schüttdichte nach einem der Ansprüche 6 bis 9, wobei der im Wesentlichen vertikale erhitzte Schacht (4) über die pneumatische Förderleitung (7) mit der als Gaszyklon (10) ausgebildeten Trennvorrichtung verbunden ist.

## Claims

1. Method for the expansion of sand grain-shaped raw material (1) in which the raw material (1) drops downwards through a substantially vertical heated shaft (4) provided with means (2) for forming a temperature profile (3), in which a shaft flow (5) prevails wherein as a result of the heat transfer in the shaft (4) the raw material (1) expands to expanded granulate (6) and the granulate (6) produced enters into a pneumatic conveying line (7) with a conveying flow (8) for further transport,
**characterized in that**
the bulk density of the expanded granulate (6) is measured continuously, wherein upon detection of a deviation from at least one defined bulk density the temperature profile (3) in the shaft (4) is adapted automatically or manually and/or the feeding of raw material (1) into the shaft (4) is reduced automatically or manually,
wherein the expanded granulate (6) is separated by a separating device, preferably a gas cyclone (10), from the conveying flow (8) in the conveying line (7),
wherein the bulk density of the granulate (6) separated by the separating device, in particular the gas cyclone (10), is measured,
wherein the separated expanded granulate (6) is concentrated to form a granulate flow (11) and said granulate flow (11) is guided into a measuring container (12),
wherein the measuring container (12) is connected to a measuring device (13) configured as a weighing device to determine the bulk density and
wherein the measuring container (12) has openings (21) in a base surface (17), through which at least one part of the granulate flow (11) drains continuously.

2. The method according to claim 1, **characterized in that** the conveying flow (8) is produced by means of an extraction device (9).

3. The method according to any one of claims 1 to 2, **characterized in that** a dosing element (14) is disposed between shaft (4) and conveying line (7).

4. The method according to any one of claims 1 to 3, **characterized in that** process air (16) is extracted from the head region (15) of the shaft (4) in order to stabilize the part of the shaft flow (5) directed to the head region (15).

5. The method according to any one of claims 1 to 3, **characterized in that** process air (16) is blown into the head region (15) of the shaft (4) in order to stabilize the part of the shaft flow (5) directed to the head region (15).

6. Device for measuring the bulk density of the expanded granulate (6) according to any one of claims 1 to 5, comprising a separating device configured as a gas cyclone (10), which can be connected to a pneumatic conveying line (7), wherein at least one measuring container (12) which has a base surface (17) is disposed underneath the gas cyclone (10) in the operating state for receiving at least a part of the granulate flow (11) from the separating device configured as a gas cyclone (10), wherein the measuring container (12) is connected to a measuring device (13) for determining the bulk density, **characterized in that**
the measuring device is configured as a weighing device, preferably as scales, and that the measuring container (12) has openings (21) in the base surface (17), in order to allow at least a part of the granulate flow (11) to drain continuously.

7. The device according to claim 6, **characterized in that** a means for concentrating the granulate flow (11), preferably a funnel (18), is disposed between the separating device configured as a gas cyclone (10) and the measuring container (12).

8. The device according to claim 6 or 7, **characterized in that** the measuring container (12) is connected via a side arm (19) to the measuring device (13).

9. The device according to any one of claims 6 to 8, **characterized in that** an overflow (20) for at least one part of the granulate flow (11) is provided on the measuring container (12).

10. System for performing a method according to any one of claims 1 to 5 with a device for measuring the bulk density according to one of claims 6 to 9, wherein the substantially vertically heated shaft (4) is connected to the separating device configured as a gas cyclone (10) via the pneumatic conveying line (7).

## Revendications

1. Procédé pour l'expansion de matière première sableuse (1), dans lequel la matière première (1) tombe dans une gaine chauffée (4) sensiblement verticale, munie de moyens (2) destinés à créer un profil de température (3), où circule un courant de gaine (5), dans lequel la matière première (1) est expansée sous l'effet du transfert de chaleur dans la gaine (4) pour donner des granulés soufflés (6) et les granulés (6) obtenus parviennent dans une conduite de transport pneumatique (7) avec un courant de transport (8) pour être transportés plus loin, **caractérisé en ce que** la densité apparente des granulés soufflés (6) est mesurée de façon continue,
le profil de température (3) dans la gaine (4) étant ajusté automatiquement ou manuellement et/ou l'introduction de matière première (1) dans la gaine (4) réduite automatiquement ou manuellement si un écart par rapport à au moins une densité apparente définie est détecté,
les granulés soufflés (6) étant séparés du courant de transport (8) dans la conduite de transport (7) par un moyen de séparation, de préférence un cyclone à gaz (10),
la densité apparente des granulés (6) séparés par le dispositif de séparation, en particulier le cyclone à gaz (10), étant mesurée,
les granulés soufflés (6) séparés étant regroupés dans un flux de granulés (11) et celui-ci étant amené dans un récipient de mesure (12),
le récipient de mesure (12) étant relié à une installation de mesure (13) conçue comme une installation de pesage pour la détermination de la densité apparente,
le récipient de mesure (12) présentant des ouvertures (21) dans une surface de fond (17) à travers lesquelles une partie au moins du flux de granulés (11) s'écoule de façon continue.

2. Procédé selon la revendication 1, **caractérisé en ce que** le courant de transport (8) est créé au moyen d'une installation d'aspiration (9).

3. Procédé selon l'une des revendications 1 à 2, **caractérisé en ce qu'**un élément doseur (14) est prévu entre la gaine (4) et la conduite de transport (7).

4. Procédé selon l'une des revendications 1 à 3, **caractérisé en ce que** de l'air de process (16) est aspiré dans la partie de sommet (15) de la gaine (4) afin de stabiliser la partie du courant de gaine (5) dirigée vers la partie de sommet (15).

5. Procédé selon l'une des revendications 1 à 3, **caractérisé en ce que** de l'air de process (16) est soufflé dans la partie de sommet (15) de la gaine (4) afin de stabiliser la partie du courant de gaine (5) dirigée vers la partie de sommet (15).

6. Dispositif pour la mesure de la densité apparente des granulés soufflés (6) selon l'une des revendications 1 à 5, comprenant un dispositif de séparation conçu comme un cyclone à gaz (10) qui peut être relié à une conduite de transport pneumatique (7), dans lequel au moins un récipient de mesure (12) présentant une surface de fond (17) est disposé, dans l'état de fonctionnement, en dessous du cyclone à gaz (10) afin de recevoir au moins une partie du flux de granulés (11) sortant du dispositif de séparation conçu comme un cyclone à gaz (10), le récipient de mesure (12) étant relié à une installation de mesure (13) pour la détermination de la densité apparente, **caractérisé en ce que** l'installation de mesure (13) est conçue comme une installation de pesage, de préférence comme une balance, et **en ce que** le récipient de mesure (12) présente des ouvertures (21) dans une surface de fond (17) pour permettre l'écoulement continu d'au moins une partie du flux de granulés (11).

7. Dispositif selon la revendication 6, **caractérisé en ce qu'**un moyen pour le regroupement du flux de granulés (11), de préférence une trémie (18), est disposé entre le dispositif de séparation conçu comme un cyclone à gaz (10) et le récipient de mesure (12).

8. Dispositif selon la revendication 6 ou 7, **caractérisé en ce que** le récipient de mesure (12) est relié par un bras (19) à l'installation de mesure (13).

9. Dispositif selon l'une des revendications 6 à 8, **caractérisé en ce qu'**il est prévu sur le récipient de mesure (12) un trop-plein (20) pour une partie au moins du flux de granulés (11).

10. Installation pour la mise en oeuvre d'un procédé selon l'une des revendications 1 à 5 avec un dispositif pour la mesure de la densité apparente selon l'une des revendications 6 à 9, dans lequel la gaine chauffée (4) sensiblement verticale communique via la conduite de transport pneumatique (7) avec le dispositif de séparation conçu comme un cyclone à gaz (10).
